(19) Europäisches Patentamt

European Patent Office

Office européen des brevets

(11) Numéro de publication: **0 424 295 A1**

## (12) DEMANDE DE BREVET EUROPEEN

(21) Numéro de dépôt: **90440075.1**

(22) Date de dépôt: **24.08.90**

(51) Int. Cl.5: **C09J 153/02**

(30) Priorité: **28.09.89 FR 8912870**

(43) Date de publication de la demande:
**24.04.91 Bulletin 91/17**

(84) Etats contractants désignés:
**AT BE CH DE DK ES GB GR IT LI LU NL SE**

(71) Demandeur: **H.B. FULLER FRANCE SARL**
**BP 12, Zone Industrielle**
**F-76580 Le Trait(FR)**

(72) Inventeur: **Pariente, Emmanuelle**
**22 A rue Malatiré**
**F-76000 Rouen(FR)**
Inventeur: **Abba, Fabienne**
**22 rue Joseph Delattre**
**F-76380 Canteleu(FR)**
Inventeur: **Lefebvre, Dominique**
**76 rue des Bleuets**
**Isneauville, F-76230 Bois Guillaume(FR)**

(74) Mandataire: **Arbousse-Bastide, Jean-Claude**
**Philippe et al**
**CABINET ARBOUSSE BASTIDE 20, rue de**
**Copenhague**
**F-67000 Strasbourg(FR)**

(54) **Colle thermofusible élastique appropriée notamment à la réalisation de ceintures élastiques sur des changes complets.**

㉗ Colle thermofusible élastique appropriée notamment à la réalisation de ceintures élastiques sur des changes complets. Cette colle comprend :
    a) au moins un caoutchouc synthétique de type bloc copolymère comportant au moins un bloc médian caoutchouteux et au moins deux blocs terminaux vitreux ;
    b) au moins une résine tackifiante s'associant au bloc médian dudit bloc copolymère ;
    c) au moins une résine tackifiante s'associant aux blocs terminaux ;
    d) au moins une huile minérale, mise en oeuvre à raison de 5 à 35 % en poids de la composition.

EP 0 424 295 A1

# COLLE THERMOFUSIBLE ELASTIQUE APPROPRIEE NOTAMMENT A LA REALISATION DE CEINTURES ELASTIQUES SUR DES CHANGES COMPLETS.

La présente invention a pour objet le produit industriel nouveau que constitue une colle thermofusible élastique appropriée notamment à la réalisation de ceintures élastiques sur des changes complets destinés à l'hygiène infantile ou adulte.

La fabrication des changes complets fait intervenir la fixation d'une bande élastique d'une part sur un substrat flexible et d'autre part sur le voile de tissu ou de non-tissé qui constitue l'intérieur du change.

Les premières bandes élastiques mises en oeuvre à cet effet furent des bandes de caoutchouc vulcanisé ou de caoutchouc synthétique qui étaient fixées au support flexible par couture, mode de fixation onéreux et difficile à mettre en pratique dans des chaînes de fabrication automatisées.

On envisagea donc de fixer les bandes élastiques au moyen d'une colle, mais on se heurta rapidement au problème posé par la fixation adhésive d'une bande élastique sur un substrat flexible, les colles existantes étant généralement peu adhérentes vis-à-vis des bandes élastiques, qui se décollaient trop facilement du substrat.

Parmi les solutions proposées à ce jour pour résoudre ce problème, on peut citer celle qui fait l'objet du brevet américain 4.081.301, qui suggère d'appliquer un adhésif sur toute la longueur des bandes élastiques maintenues en extension, avant de les mettre en contact avec le substrat. Les adhésifs préférentiellement mis en oeuvre étant activables à la chaleur et insensibles à la pression, ce procédé présente l'inconvénient de devoir faire appel à des moyens de chauffage pour opérer la fixation des bandes élastiques sur le substrat, en sorte qu'il est difficile à mettre en pratique.

Une autre solution est proposée par le brevet américain 4.418.123, qui a pour objet une colle élastique extrudable de manière continue susceptible d'être appliquée à la chaîne sur des substrats flexibles dans le cadre d'une fabrication automatisée.

La colle élastique qui fait l'objet de ce brevet est composée d'un bloc copolymère comportant au moins un bloc médian caoutchouteux et au moins deux blocs terminaux du type polyvinylarène, chacun des blocs terminaux et médians étant associé à une résine tackifiante spécifique : les blocs médians à une résine hydrocarbonée et les blocs terminaux à une résine à caractère aromatique.

Toutefois, les colles élastiques qui font l'objet de ce brevet, si elles donnent toute satisfaction au plan de l'adhésivité, ne présentent pas toutes les qualités d'élasticité souhaitées pour la réalisation de ceintures élastiques pour changes. En particulier elles s'avèrent être dures et difficiles à étirer, donc peu appropriées à ce type d'application, qui exige des qualités de souplesse, et donc d'élasticité.

Les recherches effectuées par la demanderesse lui ont permis de mettre au point une composition qui ne présente pas ces inconvénients, et dont les qualités conjointes d'adhésivité et d'élasticité sont l'une et l'autre excellentes.

La présente invention a ainsi pour objet le produit industriel nouveau que constitue une colle élastique qui comprend:

a) au moins un caoutchouc synthétique de type bloc copolymère comportant au moins un bloc médian caoutchouteux et au moins deux blocs terminaux vitreux polyvinylaréniques ;

b) au moins une résine tackifiante s'associant au bloc médian dudit bloc copolymère ;

c) au moins une résine tackifiante s'associant à ses blocs terminaux ;

d) au moins une huile minérale.

La présente invention est en effet basée sur cette observation, révélée par les nombreux essais réalisés par la demanderesse, que l'adjonction d'au moins une huile minérale au produit formé par le caoutchouc synthétique et les résines tackifiantes conduit à l'obtention d'un produit dont les propriétés élastiques sont notablement améliorées par rapport à celles du produit décrit dans le brevet sus-mentionné, et dont les propriétés adhésives sont excellentes vis-à-vis des substrats flexibles, et notamment du polyéthylène qui constitue le support le plus couramment utilisé dans ce type de fabrication.

Conformément à l'invention, les blocs médians caoutchouteux constituant partie du bloc copolymère de la composition selon l'invention sont des polymères d'hydrocarbures oléfiniques en $C_4$-$C_{10}$ di- ou tri-insaturés tels que le butadiène, l'isoprène ou l'heptatriène, éventuellement copolymérisés avec une monooléfine comme l'éthylène. Ils présentent avantageusement un poids moléculaire moyen compris entre 5.000 et 450.000.

Les blocs terminaux vitreux constituant l'autre partie des blocs copolymères sont essentiellement des polyvinylarènes comme le polystyrène, d'un poids moléculaire moyen compris entre 1.000 et 60.000.

Parmi les blocs copolymères mis en oeuvre pour obtenir la colle élastique selon l'invention on peut citer ceux comprenant au moins deux blocs terminaux substantiellement constitués de polystyrène et au moins un bloc médian substantiellement constitué de polyisoprène ou de polybutadiène.

Les blocs copolymères mis en oeuvre dans la composition selon l'invention peuvent être linéaires ou réticulés, et ils présentent un poids moléculaire compris entre 100.000 et 400.000, et de préférence entre 200.000 et 300.000.

Dans le cas de copolymères linéaires, on met préférentiellement en oeuvre des copolymères dont les blocs terminaux sont importants. Ainsi dans le cas d'un copolymère SIS (polystyrène-polyisoprène-polystyrène), ces blocs terminaux représentent avantageusement 14 à 30 % en poids du copolymère.

Dans le cas d'un bloc copolymère SBS (polystyrène-polybutadiène-polystyrène)., ils représentent de préférence 20 à 40 % en poids du copolymère.

Conformément à l'invention, les résines tackifiantes s'associant aux blocs médians des blocs copolymères sont des résines hydrocarbonées essentiellement aliphatiques d'origine naturelle ou synthétique.

A titre d'exemple de telles résines, on peut citer les résines polyterpéniques ou les résines d'hydrocarbures hydrogénés copolymérisés obtenus à partir de coupes pétrolières en $C_5$ et $C_9$.

Ces résines hydrocarbonées essentiellement aliphatiques sont mises en oeuvre, dans la composition selon l'invention, à raison de 20 % à 150 % en poids par rapport au bloc copolymère.

Les résines tackifiantes s'associant aux blocs terminaux des blocs copolymères sont avantageusement des résines à caractère aromatique telles que les polystyrènes, les polyindènes ou autres résines renfermant des groupes aromatiques mono- ou polycycliques.

A titre d'exemple de telles résines, on peut citer les résines d'α-méthylstyrène modifiées ou non.

Les résines tackifiantes à caractère aromatique sont mises en oeuvre, dans la composition selon l'invention, à raison de 10 à 50 % en poids par rapport au bloc copolymère.

Les huiles minérales entrant dans la composition de la colle élastique selon l'invention peuvent être n'importe quelle huile minérale d'origine pétrolière, à caractère principalement paraffinique, naphténique ou aromatique.

Ces huiles minérales sont mises en oeuvre, dans la colle élastique selon l'invention, à raison de 5 à 35 % en poids de la composition.

La colle élastique selon l'invention peut renfermer, outre le bloc copolymère, les résines et l'huile minérale, une faible proportion d'additifs tels que des antioxydants, des stabilisants, des cires ou des pigments, à condition bien entendu que ces additifs ne nuisent pas à ses propriétés élastiques et adhésives.

La colle élastique selon l'invention est avantageusement préparée par mélange de ses différents constituants en phase liquide, soit à chaud soit en milieu solvant.

Les colles élastiques selon l'invention présentent la propriété d'être extrudables à chaud, leurs points de ramollissement se situant entre 60 et 150° C. Il s'ensuit qu'elles se prêtent facilement à une formation en rubans utilisables pour la réalisation de ceintures élastiques sur des changes complets, ces rubans pouvant être élaborés sous forme de mousses (procédé foammelt).

Les exemples qui suivent, et qui sont fournis à titre d'illustration de la présente invention, mettent en lumière les caractéristiques avantageuses de la colle élastique qui en fait l'objet, étant bien entendu que ces exemples ne présentent aucun caractère limitatif vis-à-vis de l'invention.

EXEMPLE 1.

On réalise les compositions ci-après conformes à l'invention, dans lesquelles les quantités sont exprimées en pourcent en poids.

| Composition I : | |
|---|---|
| Huile minérale commercialisée sous la dénomination "CATENEX P 941" par la Firme SHELL CHEMICAL Co | 10 |
| Caoutchouc synthétique SIS commercialisé sous la dénomination "KRATON DX1117" par la Firme SHELL CHEMICAL Co | 36 |
| Résine polyterpénique commercialisée sous la dénomination "ZONATAC 105 LITE" par la Firme ARIZONA | 44 |
| Résine α-méthylstyrène commercialisée sous la dénomination "KRISTALLEX F100" par la Firme HERCULES | 10 |

| Composition II : | |
|---|---|
| Huile minérale "CATENEX P941" | 10 |
| Caoutchouc synthétique SIS "KRATON DX1117" | 36 |
| Résine α-méthylstyrène "KRISTALLEX F100" | 10 |
| Résine d'hydrocarbure commercialisée sous la dénomination "ESCOREZ 5320" par la Firme EXXON CHEMICALS | 44 |

| Composition III : | |
|---|---|
| Huile minérale "CATENEX P941" | 5 |
| Caoutchouc synthétique SBS commercialisé sous la dénomination "TUFPRENE A" par la Firme ASAHI CHEMICAL | 10 |
| Caoutchouc synthétique SIS "KRATON DX1117" | 31 |
| Résine α-méthylstyrène "KRISTALLEX F100" | 10 |
| Résine d'hydrocarbure 'ESCOREZ 5320" | 44 |

| Composition IV : | |
|---|---|
| Huile minérale commercialisée sous la dénomination "KAYDOL" par la Firme WITCO B.V. | 14,5 |
| Caoutchouc synthétique SIS "KRATON DX1117" | 34 |
| Résine α-méthylstyrène 'KRISTALLEX F100" | 9,5 |
| Résine d'hydrocarbure "ESCOREZ 5320" | 42 |

| Composition V : | |
|---|---|
| Huile minérale "CATENEX P941" | 10 |
| Caoutchouc synthétique SBS "TUFPRENE A" | 30 |
| Résine α-méthylstyrène "KRISTALEX F100" | 5 |
| Résine d'hydrocarbure modifiée commercialisée sous la dénomination "ESCOREZ CR368" par la Firme EXXON CHEMICALS | 55 |

On réalise par ailleurs, à titre comparatif, une colle témoin A, qui ne renferme pas d'huile minérale, et dont la composition est la suivante :

| | |
|---|---|
| Caoutchouc synthétique SIS "KRATON DX1117" | 45 |
| Résine α-méthylstyrène "KRISTALLEX 5140" | 10 |
| Résine terpénique "ZONATACK 501 LITE" | 44 |
| Antioxydant commercialisé sous la dénomination "IONOX 330" par la Firme SHELL CHEMICAL Co | 1 |

4

EXEMPLE 2.

Cet exemple rassemble les données relatives aux propriétés adhésives et élastiques des compositions de l'exemple 1.

### 1) Propriétés adhésives :

On réalise avec chaque composition une éprouvette de 5cm X 2,5 cm, que l'on pose sur une plaque inox, et sur laquelle on fait passer en aller-retour un rouleau de 2 kg.

On pose ensuite sur cette éprouvette une feuille de 14cm X 3 cm de polyéthylène sur laquelle on effectue un nouveau passage aller-retour du même rouleau de 2 kg.

On place verticalement l'ensemble plaque inoxéprouvette-feuille de polyéthylène sur un dynamomètre, en fixant la feuille de polyéthylène dans l'attache mobile.

On effectue une traction à une vitesse de 100mm/min et on mesure la force nécessaire au décollage de l'éprouvette du polyéthylène selon un angle de 180°, ci-après dénommée "PEEL".

### 2) Propriétés élastiques :

On réalise avec chaque composition une éprouvette de 10cm X 2,5cm, dont on fixe les extrémités dans les mâchoires d'un dynamomètre. On opère à une vitesse de 500mm/min un allongement de 100 % portant sur une longueur initialement repérée $L_o$ de 8 cm, en couplant le dynamomètre avec une table traçante, et on note la force initiale $F_o$ nécessaire pour amorcer l'allongement de l'éprouvette.

Au bout d'une heure on arrête l'opération et on note la force $F_2$ nécessaire pour maintenir l'allongement de l'éprouvette, ainsi que sa longueur $L_2$ après 5mn de repos.

On détermine ainsi la mémoire élastique de l'éprouvette définie d'une part par son pourcentage d'allongement et d'autre part par sa perte d'élasticité, ces deux paramètres se définissant comme suit :

$$\text{allongement \%} = \frac{L_o - L_2}{L_o}$$

$$\text{perte d'élasticité \%} = \frac{F_o - F_2}{F_o}$$

Les résultats de ces différents essais sont rassemblés dans le tableau ci-après qui se réfère aux différentes compositions décrites dans l'exemple 1.

| COMPOSITION | A | I | II | III | IV | V |
|---|---|---|---|---|---|---|
| ADHESION PEEL | 13,2N | 13,0N | 12,8N | 9,3N | 10,4N | 9,4N |
| ELASTICITE | | | | | | |
| Fo | 2,47N | 0,85N | 1,15N | 1,67N | 1,00N | 1,28N |
| Allongement | 35 % | 27 % | 14 % | 21 % | 16 % | 21 % |
| Perte d'élasticité | 73 % | 51 % | 50 % | 66 % | 52 % | 59 % |

On constate, à l'examen de ce tableau, que les compositions selon l'invention présentent toutes une excellente adhésion au polyéthylène, qui se déchire dans tous les essais. Par ailleurs leur élasticité est tout à fait satisfaisante (Fo peu élevé, allongement et perte d'élasticité faibles), ce qui les différencie de la composition témoin A.

EP 0 424 295 A1

## Revendications

1. Colle thermofusible élastique appropriée notamment à la réalisation de ceintures élastiques sur des changes complets, caractérisée en ce qu'elle comprend :

a) au moins un caoutchouc synthétique de type bloc copolymère comportant au moins un bloc médian caoutchouteux et au moins deux blocs terminaux vitreux ;

b) au moins une résine tackifiante s'associant au bloc médian dudit bloc copolymère ;

c) au moins une résine tackifiante s'associant aux blocs terminaux ;

d) au moins une huile minérale ;

l'huile minérale étant mise en oeuvre à raison de 5 à 35 % en poids de la composition, tandis que les résines tackifiantes sont mises en oeuvre à raison de 20 à 150 % en poids de résine s'associant au bloc médian par rapport au bloc copolymère, et de 10 à 50 % en poids de résine s'associant aux blocs terminaux par rapport au bloc copolymère.

2. Colle thermofusible élastique selon la revendication 1, caractérisée en ce que le bloc médian caoutchouteux constituant partie du bloc copolymère est un polymère d'hydrocarbure oléfinique polyinsaturé en $C_4$-$C_{10}$, de poids moléculaire moyen compris entre 5.000 et 450.000.

3. Colle thermofusible élastique selon la revendication 1, caractérisée en ce que le bloc médian caoutchouteux est un copolymère d'hydrocarbure oléfinique polyinsaturé en $C_4$-$C_{10}$ et d'une monooléfine.

4. Colle thermofusible élastique selon la revendication 2 ou la revendication 3, caractérisée en ce que l'hydrocarbure oléfinique polyinsaturé est choisi dans le groupe formé par le butadiène, l'isoprène et l'heptatriène.

5. Colle thermofusible élastique selon la revendication 3, caractérisée en ce que la monooléfine est l'éthylène.

6. Colle thermofusible élastique selon la revendication 1, caractérisée en ce que les blocs terminaux vitreux constituant partie du bloc copolymère sont des polyvinylarènes de poids moléculaire moyen compris entre 1.000 et 60.000.

7. Colle thermofusible élastique selon la revendication 6, caractérisée en ce que lesdits polyvinylarènes sont des polystyrènes.

8. Colle thermofusible élastique selon la revendication 1, caractérisée en ce que la résine tackifiante s'associant au bloc médian du bloc copolymère est une résine hydrocarbonée essentiellement aliphatique d'origine naturelle ou synthétique.

9. Colle thermofusible élastique selon la revendication 8, caractérisée en ce que ladite résine est choisie dans le groupe formé par les résines polyterpéniques et les résines d'hydrocarbures hydrogénés copolymérisés obtenus à partir de coupes pétrolières en $C_5$ et $C_9$.

10. Colle thermofusible élastique selon la revendication 1, caractérisée en ce que la résine tackifiante s'associant aux blocs terminaux du bloc copolymère est une résine à caractère aromatique.

11. Colle thermofusible élastique selon la revendication 10, caractérisée en ce que ladite résine est choisie dans le groupe formé par les polystyrènes et les polyindènes.

12. Colle thermofusible élastique selon la revendication 10, caractérisée en ce que ladite résine est un poly-$\alpha$-méthylstyrène.

13. Colle thermofusible élastique selon la revendication 1, caractérisée en ce que l'huile minérale mise en oeuvre est une huile minérale d'origine pétrolière.

14. Colle thermofusible élastique selon la revendication 13, caractérisée en ce que ladite huile minérale est choisie dans le groupe formé par les huiles à caractère principalement paraffinique, les huiles à caractère principalement naphténique et les huiles à caractère principalement aromatique.

6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 917 607  (CROSSLAND et al.)<br>* Le document en entier *<br>– – – | 1-14 | C 09 J 153/02 |
| X | US-A-4 286 077  (St. CLAIR et al.)<br>– – – | 1-14 | |
| A | US-A-3 686 107  (RUSSEL et al.)<br>– – – – – | | |

DOMAINES TECHNIQUES RECHERCHES (Int. Cl.5)

C 09 J

Le présent rapport de recherche a été établi pour toutes les revendications

| Lieu de la recherche | Date d'achèvement de la recherche | Examinateur |
|---|---|---|
| La Haye | 29 janvier 91 | MEULEMANS R.A.M.G.G. |